# FASCICULE DE BREVET EUROPEEN

(11) **EP 0 608 180 B1**
(45) Date de publication et mention de la délivrance du brevet: **25.07.2001**
(21) Numéro de dépôt: 94400117.1
(22) Date de dépôt: 19.01.1994
(51) Int. Cl.: H01Q 1/12, H01Q 23/00

(54) **Procédé de fabrication d'un vitrage antenne et vitrage antenne**
Verfahren zur Herstellung einer Scheibenantenne und Scheibenantenne
Method for fabrication of a window antenna and window antenna

(30) Priorité: 21.01.1993 FR 9300574
(43) Date de publication de la demande: 27.07.1994
(73) Titulaire: SAINT-GOBAIN GLASS FRANCE, 92400 Courbevoie (FR)
(72) Inventeur: Potin, Marc, F-52200 Langres (FR); Letemps, Bernard, F-60150 Thourotte (FR)
(74) Mandataire: Muller, René

(56) Documents cités:
- EP-A- 0 444 416
- EP-A- 0 516 981
- DE-A- 3 834 075
- FR-A- 2 533 765
- PATENT ABSTRACTS OF JAPAN vol. 017, no. 160 (E-1342) 29 Mars 1993 & JP-A-04 323 905 (ASAHI GLASS) 13 Novembre 1992

## Description

L'invention concerne des vitrages notamment des vitrages feuilletés, par exemple pour véhicule automobile, munis de conducteurs électriques, servant d'antenne, à l'intérieur des vitrages.

Il est connu notamment dans la demande de brevet EP 0 325 510 de noyer des fils métalliques dans la couche intercalaire en matière plastique d'un vitrage feuilleté. Ces fils métalliques peuvent servir d'antenne de réception pour les émissions radio dont les fréquences ne dépassent généralement pas trois gigahertz.

Pour la réception ou l'émission de signaux dont la fréquence est supérieure et notamment des signaux hyperfréquences, ces antennes réalisées à partir de fils métalliques ne sont plus efficaces.

Pour ces fréquences, il est connu d'utiliser des surfaces métalliques appelés micro-bandes ou "pastilles".

D'autre part, cette micro-bande n'est pas toujours suffisante et doit avantageusement être associée à un plan de masse qui est une couche conductrice de superficie plus importante. Ces deux couches sont alors séparées l'une de l'autre par un diélectrique.

De façon à améliorer la réception, il est également possible d'associer plusieurs micro-bandes reliées selon des techniques connues de l'homme du métier.

Actuellement ce type de fréquence et plus précisément les bandes 5795-5815 MHz, 63-64 GHz et 74-77 GHz est notamment utilisé pour les communications route-véhicule, en particulier pour la reconnaissance des véhicules et la validation du paiement lors du passage de ces véhicules à un télépéage. Les dispositifs en développement consistent à disposer un boîtier derrière le pare-brise, ce boîtier comportant l'antenne et étant raccordé à un dispositif permettant de recevoir des informations et de renvoyer des instructions, notamment de paiement. Il comprend par exemple une unité de traitement du signal tel qu'un clavier associé à un écran. Ce dernier dispositif peut être intégré dans le tableau de bord d'un véhicule, en revanche le boîtier comportant l'antenne reste apparent car il doit être maintenu selon une orientation, définie par l'émetteur, permettant la réception du signal lors d'un passage devant cet émetteur.

Un autre inconvénient lié à ce dispositif peut être une mauvaise réception du signal, voire une réception impossible dans le cas où le pare-brise possède une couche à base d'un oxyde métallique telle qu'une couche réfléchissante. En effet, le signal est alors au moins partiellement atténué.

L'invention pallie les inconvénients cités en proposant un nouveau système d'émission et de réception d'un signal hyperfréquence.

Les problèmes posés pour l'utilisation d'une telle antenne sont résolus par l'invention qui propose un vitrage antenne, notamment pour véhicule automobile, constitué d'au moins une feuille de matériau rigide comportant une antenne surfacique composée d'une micro-bande séparée d'un plan de masse par un diélectrique.

Dans une forme de réalisation du vitrage, celui-ci est un vitrage feuilleté constitué d'au moins une feuille de verre et d'au moins une couche de matière plastique. Il peut s'agir par exemple d'un vitrage de type asymétrique tel que ceux décrits dans la demande de brevet EP A 132 198.

De façon préférée, le vitrage feuilleté est constitué d'au moins deux feuilles de verre séparées par un intercalaire, notamment en polyvinylbutyral.

Avantageusement, l'antenne est intégrée entre les deux feuilles de verre.

L'intégration de l'antenne surfacique dans le vitrage permet ainsi de ne plus avoir de dispositif au sein de l'habitacle du véhicule.

Cette réalisation permet également à l'antenne de bien épouser la forme du vitrage et d'éviter ainsi d'éventuels risques de mauvaises réceptions.

Par ailleurs, l'antenne insérée dans le vitrage est protégée de toute dégradation due à des phénomènes extérieurs.

De plus, sa position est définie une fois pour toute et ne peut pas être modifiée. Ainsi, connaissant la position de l'émetteur, par exemple celui d'un télépéage, on définit les caractéristiques et l'emplacement de l'antenne dans le vitrage et celle-ci ne peut plus être perturbée.

Un autre avantage du système selon l'invention est que la présence d'une couche réfléchissante sur l'une des faces de la feuille de verre destinée à être orientée vers l'habitacle du véhicule, qui risquait d'atténuer le signal reçu par une antenne placée dans l'habitacle, ne présente plus d'inconvénient à condition d'être disposée entre l'antenne et l'habitacle. De plus, elle peut contribuer à protéger les passagers contre les rayonnements de l'antenne.

Par ailleurs, selon un mode préféré de l'invention, la couche déposée sur une des faces de la feuille de verre intérieure c'est-à-dire orientée vers l'habitacle peut être utilisée comme plan de masse de l'antenne surfacique.

Et, selon la face sur laquelle la couche réfléchissante a été déposée, la feuille de verre peut éventuellement jouer la fonction de diélectrique.

Dans une première variante, l'antenne surfacique est disposée entre l'intercalaire et l'une des feuilles de verre.

Une seconde variante selon l'invention consiste à placer la micro-bande en contact avec la feuille de verre orientée vers l'extérieur du véhicule, le plan de masse en contact avec la feuille de verre orientée vers l'habitacle, et à utiliser l'intercalaire en tant que diélectrique.

Un autre inconvénient des antennes connues concerne le câble transportant le signal capté. En effet, dès que celui-ci dépasse une longueur donnée, il peut lui-même former une antenne et le signal qu'il reçoit perturbe le signal qu'il transporte. De plus, si sa longueur n'est pas contrôlée précisément on ne contrôle pas non plus la phase en bout de câble. Enfin, les hyperfréquences ont des taux de perte très élevés et les corrections sont délicates à réaliser. Une solution selon l'invention consiste à utiliser un câble de type "coaxial plat".

Selon une solution préférée de l'invention, l'antenne est associée à une puce électronique permettant la démodulation du signal reçu et à un fil conducteur conduisant le signal démodulé à l'extérieur du vitrage. Ce second signal a une fréquence beaucoup plus basse, ce qui résoud les problèmes cités.

L'incorporation d'une puce dans le vitrage pour cette application est d'autant plus avantageuse qu'elle peut également servir pour traiter le signal reçu ou bien également pour d'autres applications. Elle peut par exemple servir pour la réalisation de capteurs anti-buée ou bien pour la réalisation de dispositifs permettant de retrouver et d'identifier un véhicule par exemple lors d'un vol ou bien encore pour la réalisation de tout type de capteur. L'homme du métier saura définir et réaliser une puce permettant de réaliser simultanément les différentes fonctions choisies.

En ce qui concerne l'incorporation de la puce électronique, celle-ci est déposée de préférence sur un support d'intégration selon la technique "flip-chip".

Par ailleurs, la puce électronique présente des dimensions lui permettant d'être insérée dans un vitrage feuilleté.

Sa superficie est avantageusement comprise entre 1 et 2 mm² et son épaisseur inférieure à 150 microns.

De plus, pour supporter les conditions liées aux conditions de fabrication d'un vitrage feuilleté, la puce électronique résiste avantageusement à des températures comprises entre - 70°C et 160°C et à des pressions d'au moins 3 bars et de préférence d'au moins 10 bars. Pour cela, elle peut notamment être réalisée en silicium.

L'antenne présente une surface relativement importante qu'il est préférable de dissimuler. Pour cela, l'antenne, éventuellement en association avec une puce, peut être déposée dans une zone du vitrage possédant un émail sur la face externe de la feuille de verre orientée vers l'habitacle. Il peut s'agir notamment dans le cas d'un pare-brise ou d'une vitre latérale du véhicule, de la bande d'émail périphérique permettant notamment de dissimuler le collage sur le véhicule.

L'invention propose également un procédé pour la réalisation de ces vitrages et plus particulièrement de vitrages feuilletés comportant deux feuilles de verre, un intercalaire et une antenne surfacique placée entre les deux feuilles de verre.

L'incorporation d'une telle antenne au sein d'un vitrage ne peut pas se faire aussi simplement que l'incorporation de fils métalliques. En effet, ceux-ci sont peu encombrants du fait de leur faible dimension et se confondent généralement avec les réseaux chauffants. Par contre, des antennes surfaciques sont bien entendu plus encombrantes.

D'autre part, comme expliqué précédemment, elles se composent avantageusement d'au moins trois couches, qui sont la micro-bande faisant office de récepteur principal, le diélectrique et le plan de masse.

Dans une première variante de l'invention, le procédé de réalisation d'un vitrage feuilleté, notamment pour véhicule automobile, comportant une antenne surfacique se fait en une étape. Il consiste, au cours de la réalisation du vitrage, à placer entre les deux feuilles de verre une antenne complète réalisée au préalable éventuellement associée à une puce. L'antenne est déposée de sorte que la micro-bande soit orientée vers l'extérieur du véhicule.

Dans une seconde variante de l'invention, le procédé consiste à réaliser l'antenne simultanément à la réalisation du vitrage et peut alors se faire en plusieurs étapes.

Selon cette deuxième variante de l'invention, au moins une des couches formant l'antenne peut être déposée, notamment par sérigraphie ou bien sous forme de clinquants sur les faces des feuilles de verre ou sur les faces de l'intercalaire. Les couches sont soit déposées en superposition sur une même face, soit déposées sur des faces différentes, toujours en intercalant un diélectrique entre la micro-bande et le plan de masse.

Dans tous les cas, la micro-bande faisant office de récepteur principal est orientée vers l'extérieur du véhicule, par rapport au plan de masse.

Notamment dans le cas où le vitrage comporte une couche conductrice, l'antenne, la puce ou bien le capteur quel qu'il soit, est placé de façon à être à l'extérieur de la cage de Faraday formée par la couche conductrice.

D'autres détails et caractéristiques avantageuses de l'invention ressortent ci-après des exemples de réalisation décrits en référence aux figures 1, 2, 3 et 4 qui représentent :
- figure 1a : une vue de côté en élévation d'un schéma de vitrage feuilleté comportant deux feuilles de verre, un intercalaire et une antenne surfacique entre la feuille de verre orientée vers l'extérieur et l'intercalaire,
- figure 1b : une vue de détail d'une antenne surfacique,
- figure 2 : une vue de côté en élévation d'un schéma de vitrage feuilleté comportant deux feuilles de verre, un intercalaire et une antenne surfacique entre la feuille de verre orientée vers l'habitacle et l'intercalaire,
- figure 3 : une vue de côté en élévation d'un schéma de vitrage feuilleté comportant deux feuilles de verre, un intercalaire et une antenne surfacique entre les deux feuilles de verre et disposée de part et d'autre de l'intercalaire,
- figure 4 : une vue de côté en élévation d'un schéma de vitrage feuilleté comportant une feuille de verre, deux couches plastiques et une antenne surfacique entre la feuille de verre et les couches de matière plastique.

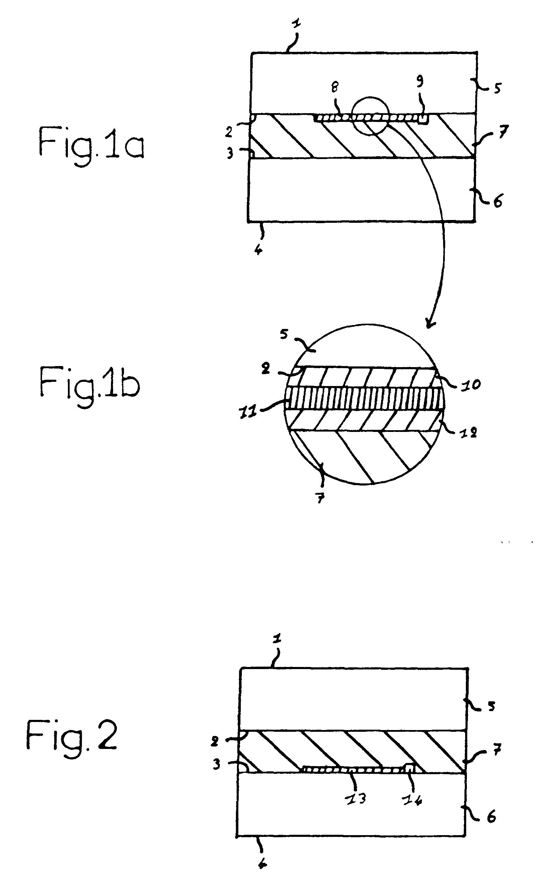

Sur la figure 1a est représentée une vue de côté en élévation d'un vitrage feuilleté composé d'une feuille de verre 5 destinée à être orientée vers l'extérieur du véhicule, une feuille de verre 6 destinée à être orientée vers l'habitacle et un intercalaire 7. Les faces des deux feuilles de verre d'un tel vitrage feuilleté sont habituellement numérotées de 1 à 4 depuis la face orientée vers l'extérieur jusqu'à la face orientée vers l'habitacle. L'intercalaire 7 est généralement en polyvinylbutyral plastifié ou en polyuréthane. Une antenne surfacique 8 est disposée entre la feuille de verre 5 orientée vers l'extérieur et l'intercalaire 7. L'antenne surfacique 8 est composée de trois couches superposées dont le détail est représenté sur la figure lb. En contact avec la feuille de verre 5, est déposée une micro-bande 10 constituant l'élément principal de réception ou d'émission dont les dimensions sont de l'ordre de grandeur de la longueur d'onde du signal reçu. Le diélectrique 11 déposé entre cette micro-bande 10 et le plan de masse 12 est par exemple une résine époxy renforcée fibres de verre ou tout autre matériau connu de l'homme du métier tel que polytétrafluoroéthylène ou cyanateester. Le plan de masse 12 recouvrant le diélectrique doit avoir une superficie supérieure à celle de la micro-bande 10. Il est possible d'associer à l'antenne surfacique 8 ainsi disposée une puce 9 qui permet de démoduler et éventuellement de traiter le signal avant que celui-ci ne soit par exemple transporté par un câble vers l'extérieur du vitrage.

Une telle puce a typiquement des dimensions de 1 mm sur 1 mm et une épaisseur d'environ 0,3 mm. Elle est donc peu encombrante et peut se noyer dans le polyvinylbutyral sans constituer une gêne du point de vue épaisseur.

Le vitrage représenté sur la figure la peut être obtenu de différentes façons. Une première technique consiste à réaliser préalablement l'antenne surfacique 8. Elle se présente alors sous forme d'un élément unique ; les différentes couches sont par exemple supportées par une résine époxy renforcée fibres de verre. Il est également possible d'associer la puce 9 permettant la démodulation lors de cette étape préalable. L'antenne 8 est ensuite déposée lors de la réalisation du vitrage entre la feuille de verre 5 et l'intercalaire 7. De façon à faciliter le montage, il est possible de prévoir un collage de l'antenne 8 par tout moyen connu de l'homme du métier.

Une autre technique consiste à déposer par exemple par sérigraphie ou bien sous forme de clinquants la micro-bande 10 de l'antenne sur la face 2 de la feuille de verre 5, placer le diélectrique 11 de façon à bien isoler la première couche 10 et déposer par dessus, par exemple par des méthodes similaires le plan de masse. Cette technique peut nécessiter une double cuisson.

Une variante de cette technique consiste à déposer le plan de masse 12, par exemple sous forme de clinquants, sur l'intercalaire 7 en polyvinylbutyral.

La figure 2 représente une vue de côté en élévation d'un autre exemple de réalisation d'un vitrage feuilleté comportant une antenne surfacique 13. Comme sur la figure la, le vitrage se compose d'une feuille de verre 5 destinée à être orientée vers l'extérieur de l'habitacle, une feuille de verre 6 destinée à être orientée vers l'habitacle et un intercalaire 7, par exemple en polyvinylbutyral. Dans cette représentation, l'antenne surfacique 13 est placée entre l'intercalaire 7 et la feuille de verre 6. Il est également possible d'associer une puce 14, à l'antenne surfacique 13, qui se noie dans l'épaisseur de l'intercalaire 7. Les techniques permettant de réaliser cette configuration sont à peu près les mêmes que celles aboutissant à la figure la. Il faut cependant remarquer que pour qu'il y ait réception d'un signal, la micro-bande doit être en contact avec le signal avant le plan de masse, qui réfléchit ce signal. La couche en contact avec le verre est dans ce cas le plan de masse, plus précisément en contact avec la face 3 de la feuille de verre 6, contrairement au cas de la figure la où c'est la micro-bande qui est en contact avec la face 2 de la feuille de verre 1.

Il est donc possible d'obtenir cette configuration soit en plaçant une antenne surfacique 13 réalisée auparavant, soit en déposant sur la face 3 de la feuille de verre 6, le plan de masse, par exemple par sérigraphie ou bien sous forme de clinquants, puis la micro-bande en intercalant un diélectrique, soit en déposant sur la face 3 de la feuille de verre 6, par exemple par sérigraphie ou bien sous forme de clinquants, le plan de masse et en déposant sur l'intercalaire 7, par exemple sous forme de clinquants, la micro-bande.

Dans le cas de la figure 2, il existe une variante supplémentaire si la feuille de verre porte une couche du type couche réfléchissante. Ce type de couche est par exemple déposée directement sur le verre à la sortie du bain float, par exemple par pyrolyse. Cette couche peut être utilisée comme plan de masse, la réalisation de l'antenne est ainsi simplifiée. De plus, si cette couche est déposée sur la face 4 de la feuille de verre 6, la feuille de verre 6 peut être utilisée en tant que diélectrique. Il ne reste plus alors qu'à déposer la micro-bande, par exemple par sérigraphie ou bien sous forme de clinquants, soit sur la feuille de verre 6 en face 3, soit sur l'intercalaire 7.

Il est également possible de déposer, par exemple par sérigraphie, un plan de masse en face 4 de la feuille de verre 6 lorsque celle-ci ne porte pas de couche du type couche réfléchissante. La feuille de verre 6 peut alors également être utilisée comme diélectrique.

Dans tous les cas et comme dans les cas de la figure 1 l'antenne peut être associée à une puce 14.

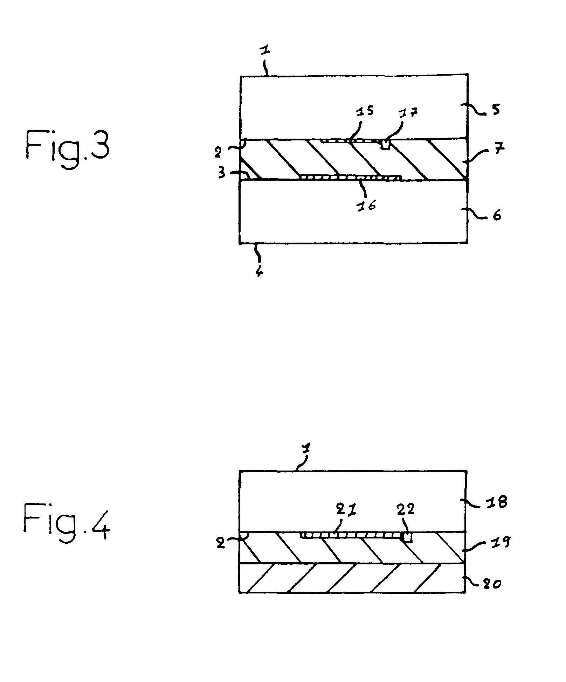

Un troisième type de représentation est décrit sur la figure 3. Le vitrage feuilleté se compose toujours de deux feuilles de verre 5 et 6 et d'un intercalaire 7 de polyvinylbutyral. Sur cette représentation, l'intercalaire 7 joue également le rôle de diélectrique pour l'antenne surfacique. La micro-bande 15 est alors placée entre la feuille de verre 5, destinée à être orientée vers l'extérieur de l'habitacle, et l'intercalaire 7. Elle peut être déposée par exemple par sérigraphie ou bien sous forme de clinquants, soit sur la face 2 de la feuille de verre 5 soit sur l'intercalaire 7. Le plan de masse 16 est déposé, par exemple par sérigraphie ou sous forme de clinquants, soit sur l'intercalaire 7 soit sur la face 3 de la feuille de verre 6. Il peut également, comme dans le cas de la figure 2, être constituée par une couche du type couche réfléchissante, déposée par exemple directement sur le verre en sortie du bain float, par pyrolyse.

Dans le cas où la micro-bande 15 et le plan de masse 16 sont déposés sur chacune des faces de l'intercalaire 7, il est concevable mais très difficile de réaliser un dépôt par exemple sous forme de clinquants sur les deux faces. En effet, cela demande une manutention très délicate. Pour éviter cet inconvénient, il est possible de réaliser les dépôts sur deux feuilles de polyvinylbutyral que l'on associe ensuite pour former l'intercalaire 7, d'épaisseur voulue, et de façon à obtenir la configuration de la figure 3. Dans chaque cas, l'antenne peut bien entendu être associée à une puce 17.

Il est possible dans le cas de chacune des figures de déposer une couche émaillée, en général sur la face 4, de la feuille de verre 6, qui permet de dissimuler l'antenne, notamment à la vue des occupants du véhicule.

La figure 4 représente une vue de côté en élévation d'un schéma de vitrage feuilleté comportant une seule feuille de verre 18, et deux couches de matière plastique 19 et 20 par exemple une couche interne en polyvinylbutyral et une couche en polyuréthane ou deux couches en polyuréthane. Sur cette représentation, l'antenne surfacique est placée en association avec une puce électronique entre la feuille de verre 18 et la couche 19.

Les différentes techniques conduisant à cette configuration sont analogues à celles de la figure la, c'est-à-dire que l'antenne peut être fabriquée auparavant ou bien elle peut être fabriquée simultanément à la fabrication du vitrage soit par dépôt par exemple par sérigraphie ou sous forme de clinquants en face 2 de la feuille de verre 18, de la micro-bande puis du plan de masse en intercalant un diélectrique, soit par dépôt du plan de masse par exemple sous forme de clinquants sur la couche 19 de matière plastique.

L'analogie faite ici avec la figure la peut être faite également avec les figures 2 et 3 pour des configurations non représentées. Il suffit alors d'associer la feuille de verre 18 à la feuille de verre 5, la couche de matière plastique 19 à l'intercalaire 7 et la couche de matière plastique 20 à la feuille de verre 6.

En ce qui concerne la réalisation des vitrages feuilletés comportant cette antenne, elle se fait par tout moyen classique connu de l'homme du métier. Celui-ci déterminera à quel moment de la fabrication l'antenne est installée, notamment dans les cas comportant des phases de dépôt.

D'autre part, l'incorporation d'une puce ne pose aucun problème, ni d'un point de vue épaisseur car elles peuvent être suffisamment fines pour se noyer dans le polyvinybutyral, ni d'un point de vue résistance car elles peuvent supporter les conditions, en particulier de température, typiques de la fabrication de vitrages feuilletés.

Les vitrages ainsi décrits peuvent être utilisés notamment comme pare-brise ou comme vitrages latéraux sur tout type de véhicules automobiles. De telles antennes, par exemple conçues pour émettre et réceptionner des fréquences de 5,8 gigahertz peuvent être utilisées pour le télépéage ou bien par exemple pour la réception d'informations autoroutières. Ces vitrages peuvent également être utilisés sur des véhicules de type avions, trains, bateaux.

Le vitrage ainsi réalisé peut être livré et le client a ensuite le choix de l'utiliser ou non. Il lui suffit alors de brancher sur une connexion prévue à cet effet un dispositif qui se raccorde ainsi à l'antenne.

Des essais ont été réalisés afin de mesurer l'atténuation du signal reçu par une antenne du type antenne surfacique incorporée dans un vitrage.

Pour réaliser ces essais on interpose une feuille de verre entre un cornet émetteur et l'antenne. Les feuilles de verre testées ont été choisies parmi les verres pouvant être utilisés en automobile.

Une atténuation inférieure à 6dB permet un bon fonctionnement de l'antenne. Une atténuation supérieure à 20 dB signifie que l'on peut utiliser la couche déposée sur le verre comme plan de masse pour l'antenne.

Résultats :

| | épaisseur (mm) | atténuation (dB) |
|---|---|---|
| verre clair | 2,2 | 2 |
| | 4 | 4,8 |
| verre coloré | 3,15 | 5,6 |
| verre comportant une couche émail argent | 4 | 30 |
| verre comportant 2 couches argent | 4 | 34 |

Ces essais confirment le bon fonctionnement d'une antenne surfacique incorporée dans un vitrage approprié.

D'autre part, ils confirment que certaines couches telles qu'un émail argent perturbe l'utilisation d'une antenne surfacique placée dans l'habitacle du véhicule.

Par contre, il apparaît également que certaines de ces couches (atténuation > 30 dB) peuvent être utilisées comme plan de masse.

## Revendications

1. Vitrage antenne notamment pour véhicule automobile constitué d'au moins deux feuilles de verre (5, 6) séparées par un intercalaire (7), notamment en polyvinylburyral, **caractérisé en ce qu**'il comporte à demeure une antenne surfacique (8, 13, 21) composée d'au moins une micro-bande (10, 15) séparée d'un plan de masse (12, 16) par un diélectrique (11), intégrée entre les deux feuilles de verre (5, 6) **et en ce que** l'antenne (8, 13, 21) est associée à une puce (9, 14, 17) montée avec elle entre les deux feuilles de verre et permettant la démodulation du signal reçu.

2. Vitrage selon la revendication 1, **caractérisé en ce que** l'antenne surfacique (8, 13), fabriquée auparavant, est disposée entre l'intercalaire (7) et une feuille de verre (5, 6).

3. Vitrage selon la revendication 1 ou 2 comportant sur la feuille de verre (6) orientée vers l'habitacle, une couche du type couche réfléchissante, **caractérisé en ce que** cette couche est utilisée comme plan de masse.

4. Vitrage selon la revendication 1, 2 ou 3, **caractérisé en ce que** l'intercalaire (7), notamment en polyvinylbutyral, est utilisé comme diélectrique.

5. Vitrage selon l'une des revendications précédentes, **caractérisé en ce qu'**il comporte une zone émaillée, notamment en périphérie.

6. Vitrage selon l'une des revendications précédentes, **caractérisé en ce que** la puce électronique (9, 14, 17) présente une superficie comprise entre 1 et 2 mm² et une épaisseur inférieure à 150 µ.

7. Vitrage selon la revendication précédente, **caractérisé en ce que** la puce électronique (9, 14, 17) supporte des températures comprises entre -70°C et 160°C.

8. Vitrage selon l'une des revendications précédentes, **caractérisé en ce que** la puce électronique (9, 14, 17) supporte des pressions d'au moins 3 bars et de préférence d'au moins 10 bars.

9. Vitrage selon l'une des revendications précédentes, **caractérisé en ce que** la puce électronique (9, 14, 17) contribue à une ou plusieurs fonctions suivantes : démodulation d'un signal, traitement d'un signal, détection de buée, identification d'un véhicule, détection d'une variation de tout type de paramètre.

10. Vitrage selon l'une des revendications précédentes, **caractérisé en ce que** la puce électronique (9, 14, 17) est fixée sur un support d'intégration selon la technique « flip-chip ».

11. Vitrage selon l'une des revendications 1 à 10, **caractérisé en ce que** en présence d'une couche conductrice sur l'une de ses feuilles (6, 7, 19, 20) l'antenne, la puce et en général le capteur est disposé de façon à se retrouver plus à l'extérieur que ladite couche conductrice lorsque le vitrage est monté sur le véhicule.

12. Procédé de réalisation d'un vitrage feuilleté constitué d'au moins deux feuilles de verre, notamment pour véhicule automobile, **caractérisé en ce qu'**au cours de la réalisation on dépose entre les feuilles de verre une antenne surfacique (8, 13, 21) préalablement fabriquée, associée à une puce (9, 14, 17) permettant notamment la démodulation du signal reçu.

13. Procédé de réalisation d'un vitrage feuilleté, notamment pour véhicule automobile, **caractérisé en ce qu**'on réalise une antenne surfacique (8, 13, 21) associée à une puce (9, 14, 17) au sein du vitrage simultanément à la réalisation de celui-ci.

14. Procédé selon la revendication 13, **caractérisé en ce que** l'on dépose, au moins une couche (10, 15, 16) constitutive de l'antenne sur une face (2, 3) de l'une des feuilles de verre (5, 6).

15. Procédé selon la revendication 14, **caractérisé en ce que** l'on dépose une autre couche (12) par dessus la première en interposant un diélectrique (11).

16. Procédé selon la revendication 13, **caractérisé en ce que** l'on dépose au moins une couche (12, 15, 16) formant l'antenne sur une face de l'intercalaire (7) notamment en polyvinylbural.

17. Utilisation d'un vitrage antenne comportant une antenne surfacique, décrit selon l'une des revendications 1 à 11, pour la réception et l'émission de fréquence supérieure à 1ghz et de préférence pour les bandes de fréquence 5795-5815 Mhz, 63-64 Ghz et 74-77 Ghz.

## Patentansprüche

1. Scheibenantenne, insbesondere für ein Kraftfahrzeug, welche aus wenigstens zwei Glasscheiben (5, 6) besteht, die durch eine speziell aus Polyvinylbutyral bestehende Zwischenschicht (7) getrennt sind, **dadurch gekennzeichnet, dass** sie dauerhaft eine Flächenantenne (8, 13, 21) enthält, die aus mindestens einem Mikroband (10, 15) aufgebaut ist, das durch ein Dielektrikum (11) von einer Massenfläche (12, 16) getrennt und zwischen den zwei Glasscheiben (5, 6) integriert ist, **und dass** die Antenne (8, 13, 21) mit einem Chip (9, 14, 17) verbunden ist, der mit ihr zwischen den zwei Glasscheiben angebracht ist und die Demodulation des empfangenen Signals erlaubt.

2. Scheibenantenne nach Anspruch 1, **dadurch gekennzeichnet, dass** die vorgefertigte Flächenantenne (8, 13) zwischen der Zwischenschicht (7) und einer Glasscheibe (5, 6) angeordnet ist.

3. Scheibenantenne nach Anspruch 1 oder 2, welche auf der zur Fahrgastzelle zeigenden Glasscheibe (6) eine Schicht vom Typ Reflexionsschicht umfasst, **dadurch gekennzeichnet, dass** diese Schicht als Massenfläche genutzt wird.

4. Scheibenantenne nach Anspruch 1, 2 oder 3, **dadurch gekennzeichnet, dass** die insbesondere aus Polyvinylbutyral bestehende Zwischenschicht (7) als Dielektrikum verwendet wird.

5. Scheibenantenne nach einem der vorhergehenden Ansprüche, **dadurch gekennzeichnet, dass** sie, insbesondere am Rand, einen emaillierten Bereich umfasst.

6. Scheibenantenne nach einem der vorhergehenden Ansprüche, **dadurch gekennzeichnet, dass** der Elektronikchip (9, 14, 17) eine Fläche von 1 bis 2 mm² und eine Dicke von unter 150 µm aufweist.

7. Scheibenantenne nach einem der vorhergehenden Ansprüche, **dadurch gekennzeichnet, dass** der Elektronikchip (9, 14, 17) Temperaturen von -70 bis 160 °C erträgt.

8. Scheibenantenne nach einem der vorhergehenden Ansprüche, **dadurch gekennzeichnet, dass** der Elektronikchip (9, 14, 17) Drücke von mindestens 3 bar und vorzugsweise mindestens 10 bar erträgt.

9. Scheibenantenne nach einem der vorhergehenden Ansprüche, **dadurch gekennzeichnet, dass** der Elektronikchip (9, 14, 17) zu einer oder mehreren der folgenden Funktionen beiträgt: Demodulation eines Signals, Verarbeitung eines Signals, Feststellung von Beschlag, Identifizierung eines Fahrzeugs und Nachweis eine Vielzahl beliebiger Parameter.

10. Scheibenantenne nach einem der vorhergehenden Ansprüche, **dadurch gekennzeichnet, dass** der Elektronikchip (9, 14, 17) gemäß dem Flip-Chip-Verfahren auf einem Integrationsträger fixiert ist.

11. Scheibenantenne nach einem der Ansprüche 1 bis 10, **dadurch gekennzeichnet, dass** bei Vorhandensein einer leitfähigen Schicht auf einer der Glasscheiben (6, 7, 19, 20) die Antenne, der Elektronikchip und im Allgemeinen der Sensor derart angeordnet sind, dass sie sich weiter außen als die leitfähige Schicht befinden, wenn die Scheibenantenne im Fahrzeug eingebaut ist.

12. Verfahren zur Herstellung einer aus mindestens zwei Glasscheiben bestehenden Verbundverglasung, insbesondere für ein Kraftfahrzeug, **dadurch gekennzeichnet, dass** bei dieser Herstellung zwischen den Glasscheiben eine vorgefertigte Flächenantenne (8, 13, 21) aufgebracht wird, die mit einem Elektronikchip (9, 14, 17) verbunden ist, der speziell die Demodulation des empfangenen Signals erlaubt.

13. Verfahren zur Herstellung einer Verbundverglasung, insbesondere für ein Kraftfahrzeug, **dadurch gekennzeichnet, dass** in der Verbundverglasung gleichzeitig mit deren Herstellung eine mit einem Elektronikchip (9, 14, 17) verbundene Flächenantenne (8, 13, 21) erzeugt wird.

14. Verfahren nach Anspruch 13, **dadurch gekennzeichnet, dass** mindestens eine einen Bestandteil der Antenne bildende Schicht (10, 15, 16) auf einer Seite (2, 3) einer der Glasscheiben (5, 6) aufgebracht wird.

15. Verfahren nach Anspruch 14, **dadurch gekennzeichnet, dass** auf der ersten eine weitere Schicht (12) aufgebracht wird, wobei ein Dielektrikum (11) dazwischengelegt wird.

16. Verfahren nach Anspruch 13, **dadurch gekennzeichnet, dass** mindestens eine die Antenne bildende Schicht (12, 15, 16) auf einer Seite der insbesondere aus Polyvinylbutyral bestehenden Zwischenschicht (7) aufgebracht wird.

17. Verwendung einer Scheibenantenne, die eine Flächenantenne gemäß einem der Ansprüche 1 bis 11 enthält, für das Empfangen und Senden von Frequenzen von über 1 GHz und vorzugsweise für die Frequenzbänder 5 795 bis 5 815 MHz, 63 bis 64 GHz und 74 bis 77 GHz.

## Claims

1. Antenna glazing particularly for a car constituted by at least two glass sheets (5, 6) separated by a spacer (7), more particularly of polyvinyl butyral, characterized in that it permanently has a surface antenna (8, 13, 21) formed from at least one microstrip (10, 15) separated from an earth plane (12, 16) by a dielectric (11) integrated between the two glass sheets (5, 6) and in that the antenna (8, 13, 21) is associated with a chip (9, 14, 17) fitted therewith between the two glass sheets and permitting the demodulation of the signal received.

2. Glazing according to claim 1, characterized in that the prefabricated surface antenna (8, 13) is placed between the spacer (7) and a glass sheet (5, 6).

3. Glazing according to claim 1 or 2 having on the glass sheet (16) oriented towards the car interior a reflecting-type layer, characterized in that said layer is used as the earth plane.

4. Glazing according to claim 1, 2 or 3, characterized in that the spacer (7), more particularly of polyvinyl butyral, is used as the dielectric.

5. Glazing according to one of the preceding claims, characterized in that it has an enamelled area, more particularly on the periphery.

6. Glazing according to one of the preceding claims, characterized in that the microchip (9, 14, 17) has an area between 1 and 2 mm' and a thickness below 150 µ.

7. Glazing according to the preceding claim, characterized in that the microchip (9, 14, 17) is able to withstand temperatures between -70 and +160°C.

8. Glazing according to one of the preceding claims, characterized in that the microchip (9, 14, 17) is able to withstand pressures of at least 3 bars and preferably at least 10 bars.

9. Glazing according to one of the preceding claims, characterized in that the microchip (9, 14, 17) contributes to one or more of the following functions: demodulation of a signal, processing a misting up detection signal, identification of vehicle and detection of a variation of any type of parameter.

10. Glazing according to one of the preceding claims, characterized in that the microchip (9, 14, 17) is fixed to an integration support according to the flip-chip procedure.

11. Glazing according to one of the claims 1 to 10, characterized in that in the presence of a conductive layer on one of its sheets (6, 7, 19, 20) the antenna, the chip and in general the sensor is positioned in such a way as to be located further to the outside than said conductive layer when the glazing is fitted on the vehicle.

12. Process for the production of a laminated glazing constituted by at least two glass sheets, particularly for a car, characterized in that during production between the glass sheets is deposited a prefabricated surface antenna (8, 13, 21), associated with a chip (9, 14, 17) more particularly permitting the demodulation of the signal received.

13. Process for the production of a laminated glazing, particularly for a car, characterized in that a surface antenna (8, 13, 21) associated with a chip (9, 14, 17) is produced within the glazing simultaneously with the production of the latter.

14. Process according to claim 13, characterized in that at least one constituent layer (10, 15, 16) of the antenna is deposited on one face (2, 3) of one of the glass sheets (5, 6).

15. Process according to claim 14, characterized in that another layer (12) is deposited over the first, whilst interposing a dielectric (11).

16. Process according to claim 13, characterized in that at least one layer (12, 15, 16) forming the antenna is deposited on one face of the spacer (7), more particularly of polyvinyl butyral.

17. Use of an antenna glazing having a surface antenna according to one of the claims 1 to 11 for the reception and transmission of frequencies above 1 Ghz and preferably for frequency bands of 5795-5815 Mhz, 63-64 Ghz and 74-77 Ghz.
